# FASCICULE DE BREVET EUROPEEN

(11) **EP 1 915 520 B1**
(45) Date de publication et mention de la délivrance du brevet: **26.08.2009**
(21) Numéro de dépôt: 06779024.6
(22) Date de dépôt: 07.07.2006
(51) Int. Cl.: F01N 7/18

(54) **FIXATION D'UN ELEMENT D'ECHAPPEMENT SUR LE MOTEUR**
BEFESTIGUNG EINES ABGASELEMENTS AM MOTOR
FIXATION OF AN EXHAUST ELEMENT ON THE ENGINE

(30) Priorité: 18.07.2005 FR 0552222
(43) Date de publication de la demande: 30.04.2008
(73) Titulaire: Faurecia Systemes D'echappement (Société par actions simplifiée), 92000 Nanterre (FR); RENAULT S.A.S., 92100 Boulogne Billancourt (FR)
(72) Inventeur: NAPPEZ, Philippe, F-25700 Mathay (FR); GREBER, Frédéric, F-25150 Ecot (FR); LERDUNG, Gérard, F-25700 Mathay (FR)
(74) Mandataire: Rhein, Alain
(86) Numéro de dépôt international: PCT/FR2006/050685
(87) Numéro de publication internationale: WO 2007/012773

(56) Documents cités:
- EP-A- 0 961 014
- FR-A- 2 862 915
- FR-A- 2 879 692
- FR-A1- 2 856 735
- PATENT ABSTRACTS OF JAPAN vol. 2003, no. 12, 5 décembre 2003 (2003-12-05) -& JP 2004 076632 A (SUZUKI MOTOR CORP), 11 mars 2004 (2004-03-11)

## Description

La présente invention a trait à un dispositif pour la fixation, sur le moteur d'un véhicule automobile, d'un élément que comporte une ligne d'échappement des gaz issus de la combustion d'un carburant au sein de ce moteur.

Cette invention concerne le domaine de l'industrie automobile et, plus particulièrement, celui de la fabrication des équipements destinés à assurer l'échappement des gaz résultant de la combustion d'un carburant au sein d'un moteur thermique équipant un véhicule automobile.

Un tel équipement se présente, usuellement, sous la forme d'une ligne d'échappement raccordée au moteur et constituée par une pluralité d'éléments dont un collecteur, un ou plusieurs catalyseurs et/ou un filtre à particules, voire encore un turbocompresseur, usuellement raccordés entre eux par des tubes ou des portions de tubes d'échappement.

A ce propos, on observera que cette ligne d'échappement est rendue solidaire dudit moteur principalement au travers de la fixation du collecteur sur ce moteur, voire, et de manière additionnelle, au travers de la fixation sur ce moteur d'un autre élément de cette ligne d'échappement, notamment un catalyseur ou un filtre à particules.

Pour réaliser la fixation de cet autre élément, il est connu de rapporter sur ce moteur un support, notamment une béquille ou analogue, duquel est rendu solidaire cet autre élément de ligne d'échappement, notamment par l'intermédiaire d'une sangle.

Une telle fixation est décrite dans le document FR 2 862 915 A.

A ce propos, il convient d'observer que l'assemblage des différents éléments d'une ligne d'échappement se fait avec un certain jeu de sorte que, lorsque les collecteurs de deux lignes d'échappement différentes sont fixés sur un moteur, le même élément (autre que le collecteur, notamment un catalyseur, un filtre à particules ou autre) de deux lignes d'échappement différentes peut venir se positionner à une distance différente du moteur.

Aussi, lorsqu'on fixe un tel élément (autre que le collecteur) sur le support, on déforme la ligne d'échappement et on soumet celle-ci à des contraintes statiques qui viennent s'ajouter à des contraintes thermomécaniques et vibratoires, résultant du fonctionnement du moteur.

Ces contraintes pénalisent fortement la fiabilité d'une telle ligne d'échappement.

Aussi et de manière à garantir une telle fiabilité, il convient d'optimiser la définition technique d'une telle ligne d'échappement et de recourir à des matériaux dont les dimensions (notamment l'épaisseur) et les performances mécaniques sont accrues ce qui se traduit par une élévation considérable du coût de revient d'une telle ligne d'échappement.

La présente invention se veut de remédier aux inconvénients de la fixation, telle que décrite ci-dessus, d'une telle ligne d'échappement sur un moteur.

A cet effet, l'invention concerne un dispositif pour la fixation, sur le moteur d'un véhicule automobile, d'un élément d'échappement que comporte une ligne d'échappement des gaz issus de la combustion d'un carburant au sein de ce moteur, ce dispositif comportant, d'une part, au moins un support destiné à être rendu solidaire dudit moteur, d'autre part, des moyens pour rendre cet élément d'échappement solidaire de ce support et, d'autre part encore, des moyens, interposés entre le support et l'élément d'échappement à fixer, et conçus pour assurer un maintien de cet élément d'échappement à une distance déterminée dudit support et, par conséquent, du moteur. Ce dispositif est
caractérisé par le fait que les moyens de maintien sont constitués par au moins une pièce mobile par rapport à l'élément d'échappement et/ou au support, ceci en direction et/ou à l'intérieur d'un espacement défini entre cet élément d'échappement et son support.

Les avantages du dispositif conforme à l'invention consistent en ce que ce dispositif comporte des moyens pour assurer le maintien d'un élément d'échappement à une distance déterminée du support. De tels moyens de maintien sont, avantageusement, de type ajustable en sorte de pouvoir s'adapter à un espacement défini entre l'élément d'échappement et son support. Ceci permet, avantageusement, à l'élément d'échappement, autre que le collecteur, d'être fixé et maintenu sur le support (solidaire du moteur) dans la position exacte adoptée par cet élément d'échappement, avant sa fixation sur le support et après fixation du collecteur de la ligne d'échappement sur ce moteur. Une telle fixation est réalisée sans soumettre la ligne d'échappement à une quelconque contrainte hyperstatique ce qui permet, avantageusement, de garantir la fiabilité de cette ligne d'échappement.

De manière avantageuse, les moyens de maintien sont constitués par des pièces mobiles par rapport à l'élément d'échappement et/ou au support, ceci en direction dudit espacement susmentionné ou à l'intérieur de cet espacement. Ceci autorise un déplacement de ces pièces mobiles à l'intérieur de cet espacement de manière à pouvoir les amener dans une position dans laquelle ces pièces assurent une immobilisation de l'élément d'échappement dans une position dans laquelle cet élément d'échappement ne subit aucune contrainte hyperstatique.

D'autres buts et avantages de la présente invention apparaîtront au cours de la description qui va suivre se rapportant à des modes de réalisation qui ne sont donnés qu'à titre d'exemples indicatifs et non limitatifs. '

La compréhension de cette description sera facilitée en se référant aux dessins joints en annexe et dans lesquels :
- la figure 1 est une vue schématisée et de face de l'implantation d'une ligne d'échappement au niveau d'un moteur ;
- la figure 2 est une vue schématisée, en coupe et de côté d'un premier mode de réalisation des moyens de maintien que comporte le dispositif de fixation conforme à l'invention ;
- la figure 3 est une vue schématisée d'un détail des moyens de maintien du dispositif de fixation illustré figure 2 ;
- la figure 4 est une vue schématisée, en coupe et de côté d'un second mode de réalisation des moyens de maintien du dispositif de fixation conforme à l'invention ;
- la figure 5 est une vue schématisée d'un détail des moyens de maintien du dispositif de fixation illustré figure 4 ;
- la figure 6 est une vue schématisée et en détail du support illustré figures 4 et 5 et recevant les moyens de maintien ;
- la figure 7 est une vue schématisée, en coupe et de côté d'un troisième mode de réalisation des moyens de maintien du dispositif de fixation conforme à l'invention;
- la figure 8 est une vue schématisée, en détail et en perspective des moyens de maintien illustrés figure 7.

La présente invention concerne le domaine de la fabrication des équipements destinés à l'industrie automobile, plus particulièrement les équipements conçus pour assurer l'échappement des gaz issus de la combustion d'un carburant au sein d'un moteur thermique.

Un tel équipement adopte, usuellement, la forme d'une ligne d'échappement 1 constituée par une pluralité d'éléments d'échappement 2 raccordés entre eux par le biais d'un tube 3 ou d'une portion de tube d'échappement.

De manière connue en soi, une telle ligne d'échappement 1 comporte, d'une part, un élément d'échappement principal constitué par un collecteur 20 conçu pour assurer la fixation de cette ligne d'échappement 1 sur le moteur 4 et, d'autre part, par au moins un élément d'échappement additionnel 21, notamment constitué par au moins un turbocompresseur 211, au moins un catalyseur 212 et/ou au moins un filtre à particules.

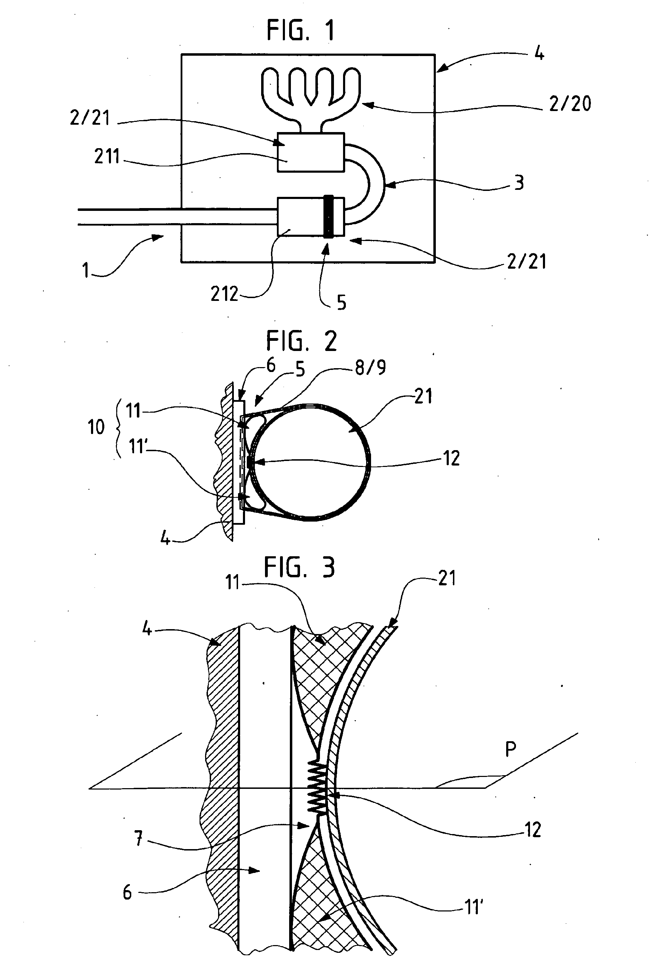

A ce propos, il convient d'observer que, dans la suite de la description, il sera, plus particulièrement, fait référence à une ligne d'échappement 1 illustrée figure 1 et comportant un élément d'échappement principal constitué par un collecteur 20, des éléments d'échappement additionnels 21 (constitués par un turbocompresseur 211 et un catalyseur 212) implantés successivement le long de cette ligne d'échappement 1, sachant, cependant, que la présente invention n'y est aucunement limitée.

En fait et tel qu'évoqué ci-dessus, lorsque cet élément d'échappement principal (collecteur 20) est fixé sur le moteur, le ou les éléments d'échappement additionnels 21 viennent se positionner à une distance déterminée (notamment fonction de l'assemblage des différentes pièces de la ligne d'échappement 1) de ce moteur 4.

L'invention concerne, alors, un dispositif 5 pour la fixation, sur le moteur 4 d'un véhicule automobile, d'un élément d'échappement 2, plus particulièrement d'un élément additionnel d'échappement 21, notamment constitué par un catalyseur 212 comme illustré dans les figures en annexe.

Un tel dispositif de fixation 5 comporte, d'une part, au moins un support 6, plus particulièrement sous la forme d'une platine de fixation ou analogue, destiné à être rendu solidaire dudit moteur 4, plus particulièrement du bloc moteur, notamment par boulonnage, vissage ou analogue. A ce propos, on observera que, après fixation de l'élément d'échappement principal 20 de la ligne d'échappement 1 sur le moteur 4, l'élément d'échappement additionnel 21 à fixer sur ce moteur 4 est positionné à une distance déterminée du moteur 4 mais également dudit support 6, de sorte qu'il est défini un espacement 7 entre ce support 6 et cet élément d'échappement additionnel 21.

Ce dispositif de fixation 5 comporte, d'autre part, des moyens 8 pour rendre cet élément d'échappement 21 solidaire dudit support 6. Aussi et tel que visible figures 2 à 7, de tels moyens 8 de solidarisation peuvent adopter la forme d'au moins une sangle 9 ou analogue, d'une part, venant entourer l'élément d'échappement 21 à fixer et, d'autre part, fixée sur ledit support 6.

Selon l'invention, le dispositif de fixation 5 comporte des moyens 10, interposés entre le support 6 et l'élément d'échappement 21 à fixer, et conçus pour assurer un maintien de cet élément d'échappement 21 à une distance déterminée dudit support 6 et, par conséquent, du moteur 4.

Selon une caractéristique additionnelle, de tels moyens de maintien 10 sont de type ajustable à la distance que sépare cet élément d'échappement 21 et le support 6 après fixation d'une extrémité de la ligne d'échappement 1 (plus particulièrement du collecteur 20) sur ce moteur 4. Ceci permet, avantageusement, une fixation dudit élément d'échappement 21 à la distance exacte du moteur 4 à laquelle cet élément 21 vient se positionner après fixation du collecteur 20 sur ce moteur 4. La fixation de cet élément d'échappement 21 est, alors, réalisée sans soumettre la ligne d'échappement 1 à une quelconque contrainte statique.

Un premier mode de réalisation non représenté consiste en ce que de tels moyens de maintien 10 ajustables sont constitués par un jeu de pièces interchangeables, d'épaisseurs différentes, et destinées à être interposées entre ledit élément d'échappement 21 et le support 6.

Cependant et selon un mode de réalisation préféré, ces moyens de maintien 10 ajustables sont constitués par au moins une pièce mobile par rapport à l'élément d'échappement 21 et/ou par rapport au support 6.

En fait, on observera que ces moyens de maintien 10 peuvent être constitués par une seule pièce mobile (mode de réalisation non représenté), voire et de préférence par deux pièces mobiles (figures 2 à 8) comme il sera plus particulièrement fait référence dans la suite de la description sans que la présente invention y soit limitée. Selon un autre mode de réalisation non représenté, ces moyens de maintien 10 peuvent, encore, être constitués par au moins une telle pièce mobile complétée par au moins une pièce fixe.

A ce propos, on observera que la mobilité de ces moyens de maintien 10 permet, essentiellement, un déplacement de ces moyens de maintien 10 en direction et/ou à l'intérieur de l'espacement 7 défini entre l'élément d'échappement 21 et son support 6.

Cette mobilité permet, alors avantageusement, aux moyens de maintien 10 de venir se positionner ou d'être amenés dans une position dans laquelle ces moyens 10 prennent appui contre ledit élément d'échappement 21 et contre le support 6 et, ainsi, viennent caler cet élément d'échappement 21 par rapport à son support 6.

A ce propos, il convient d'observer que ledit élément d'échappement 21 peut présenter une section polygonale (notamment carré, rectangulaire ou autre), voire (et de préférence comme visible figures 2 à 5) une section circulaire.

Les moyens de maintien 10 sont, alors, constitués par au moins une cale 11, 11' présentent, alors, une forme appropriée (notamment définie en fonction de la forme de l'élément d'échappement 21) et conçue pour autoriser, par déplacement de ces moyens de maintien 10, un positionnement de ces derniers 10 entre ledit élément d'échappement 21 et le support 6 en sorte de caler ceux-ci (6, 21).

Un mode particulier de réalisation (non représenté) consiste en ce que ledit élément d'échappement 21 adopte une section carrée ou rectangulaire tandis que les moyens de maintien 10 adoptent, alors, une forme en coin.

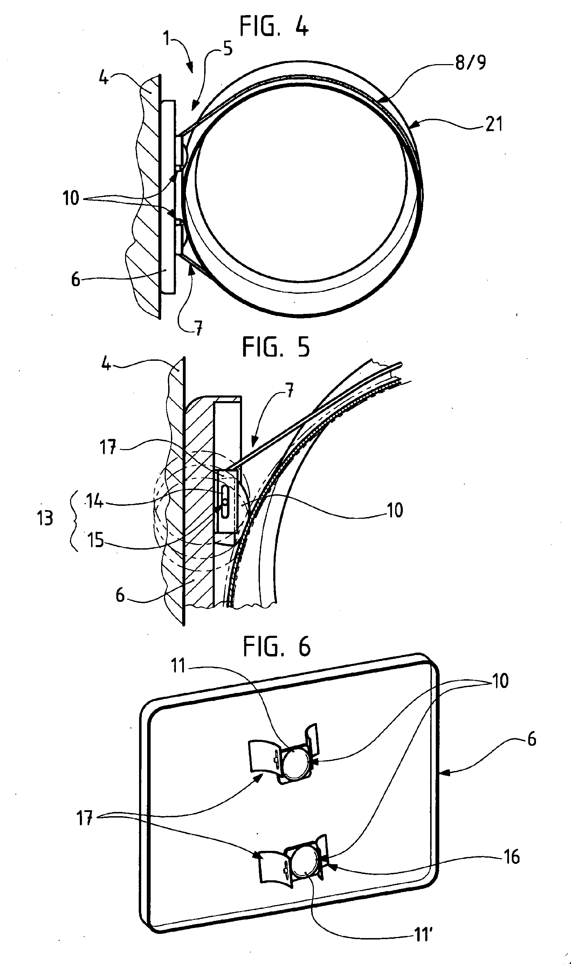

Cependant et selon un mode préféré de réalisation, ledit élément d'échappement 21 présente une section circulaire. Les moyens de maintien 10 peuvent, alors, présenter une forme parallélépipédique, en virgule (figures 2 et 3), au moins partiellement arrondie (plus particulièrement en direction dudit élément d'échappement 21 comme visible figures 4 à 6), en coin ou analogue.

Il a été représenté figures 2 et 3 un mode particulier de réalisation pour lequel les moyens de maintien 10 sont constitués par une cale 11, 11' adoptent la forme d'une virgule. En fait, une telle cale 11, 11' peut, avantageusement, être réalisée (par exemple par pliage, emboutissage ou analogue) à partir d'une lame, notamment de type métallique ou analogue.
Tel qu'évoqué ci-dessus, les moyens de maintien 10 sont constitués par au moins une cale 11, 11'.

Il a été représenté figures 2 à 8 des modes de réalisation préférés de l'invention pour lesquels ces moyens de maintien 10 sont constitués par deux cales 11, 11' disposées de part et d'autre d'un plan P au moins parallèle (voire confondu comme visible figures 2 et 4) au plan médian de l'élément d'échappement 21 à fixer.

Selon une autre caractéristique de l'invention, le dispositif de fixation 5 est conçu en sorte qu'au moins une partie des moyens de maintien 10 soient mobiles en direction de la position de maintien de l'élément d'échappement 21 uniquement sous l'effet de la gravité. Un tel mode de réalisation a été représenté figures 4 à 6 pour l'une des cales 11 constituant ces moyens de maintien 10.

Cependant et selon une autre caractéristique de l'invention, le dispositif de fixation 5 peut comporter des moyens de rappel 12 d'au moins une partie des moyens de maintien 10 en direction de la position de maintien de l'élément d'échappement 21.

De tels moyens de rappel 12 permettent, alors avantageusement, d'assurer le positionnement des moyens de maintien 10 de manière appropriée dans l'espacement 7 pour assurer un maintien de l'élément d'échappement 21, ceci de manière automatique, notamment sans l'intervention d'un opérateur.

En fait, de tels moyens de rappel 12 peuvent être de type élastique et sont, alors et de préférence, constitués par un ressort de rappel ou analogue.

De tels moyens de rappel 12 peuvent, alors, être associés à l'une au moins de cales 11, 11' constituant les moyens de maintien 10 susmentionnés.

A ce propos, il a été représenté figures 2 et 3 un mode de réalisation particulier de l'invention concernant un dispositif de fixation 5 comportant deux cales 11, 11' raccordées entre elles par le biais de moyens de rappel 12 de l'une 11 vers l'autre 11', plus particulièrement constitués par un ressort ou analogue.

De manière additionnelle et selon un mode de réalisation particulier de l'invention non représenté, le dispositif de fixation 5 peut être conçu pour autoriser une mobilité, d'une part, de certains moyens de maintien 10 sous l'effet de la gravité et, d'autre part, d'autres moyens de maintien 10 sous l'effet de moyens de rappel 12, notamment du type susmentionné.

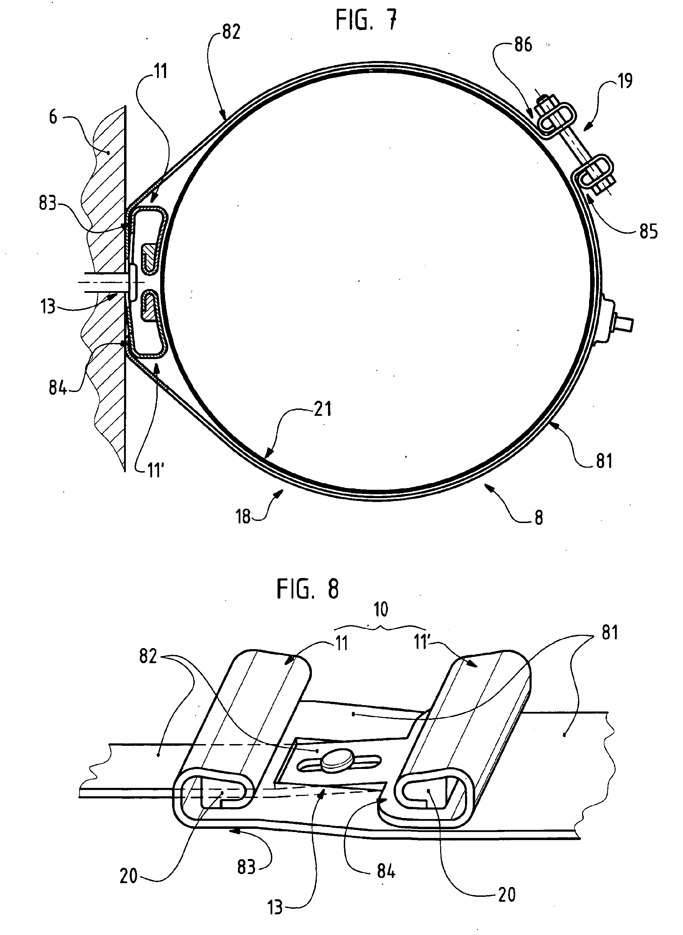

Selon une autre caractéristique de l'invention et tel que visible figures 7 et 8, le dispositif de fixation 5 peut comporter des moyens 18 conçus pour amener au moins une pièce mobile, que comportent les moyens de maintien 10, dans une position de maintien de l'élément d'échappement 21, ceci sous l'impulsion d'une action exercée par un opérateur.

En fait et tel que visible sur ces mêmes figures, les moyens 18 pour amener une telle pièce mobile en position de maintien sont constitués par une partie au moins des moyens de solidarisation 8 que comporte ledit dispositif de fixation 5, qui est associée à cette pièce mobile et sur laquelle agit l'opérateur.

A ce propos, on observera que ces moyens de solidarisation 8 comportent au moins un élément présentant une première portion (plus particulièrement constituée par une première extrémité d'un tel élément) associée à une pièce mobile des moyens de maintien 10 ainsi qu'une deuxième portion (plus particulièrement constituée par une extrémité libre d'un tel élément) sur laquelle agit l'opérateur en vue d'amener cette pièce mobile dans une position de maintien de l'élément d'échappement 21. Dans un pareil cas, les moyens de maintien 10 peuvent, encore, comporter une autre pièce, notamment de type fixe, voire (et de préférence) de type mobile.

En fait et selon un mode de réalisation préféré visible figures 7 et 8, ces moyens de solidarisation 8 comportent deux éléments 81; 82 présentant, chacun, d'une part, une première portion 83; 84 associée à une pièce (selon le cas, mobile ou fixe) des moyens de maintien 10 et, d'autre part, une deuxième portion 85; 86, notamment de type libre.

A ce propos, on observera que les deux éléments 81; 82 de ces moyens de solidarisation 8 sont agencés en sorte de définir, substantiellement, une sangle 9 entourant l'élément d'échappement 21 à maintenir.

Aussi, en exerçant une traction sur la deuxième portion 85; 86 d'un tel élément 81; 82 de ces moyens de solidarisation 8, la pièce mobile des moyens de maintien 10, associée à cet élément 81; 82, se déplace en direction et/ou à l'intérieur de l'espacement 7 jusqu'à venir adopter une position de maintien appropriée de l'élément d'échappement 21.

A ce propos, il convient d'observer que le dispositif de fixation 5 peut être conçu en sorte qu'au moins une pièce, voire (et de préférence) que les deux pièces des moyens de maintien 8 soient mobiles par rapport à l'élément d'échappement 21 et/ou au support 6, ceci en direction et/ou à l'intérieur de l'espacement 7.

Selon une autre caractéristique de l'invention, le dispositif de fixation 5 comporte, encore, des moyens 19 aptes à exercer une traction sur les moyens 18 pour amener une pièce mobile en position de maintien de l'élément d'échappement 21 à maintenir.

En fait, de tels moyens de traction 19 sont conçus aptes à exercer une traction sur au moins une deuxième portion 85; 86 que présente au moins un élément 81; 82 que comportent les moyens de solidarisation 8.

Cependant et selon un mode de réalisation préféré, le dispositif 5 comporte, en fait, des moyens 19, associés à l'une au moins des deux deuxièmes portions 85; 86 des deux éléments 81; 82 des moyens de solidarisation 8, et aptes à exercer une traction sur l'autre de ces deux deuxièmes portions 85; 86.

En fait, un mode de réalisation préféré de l'invention consiste en ce que le dispositif 5 est conçu en sorte de pouvoir exercer (de préférence de manière simultanée) une traction sur les deux deuxièmes portions 85; 86 des deux éléments 81; 82 de ces moyens de solidarisation 8, ceci dans une direction sensiblement opposée et en vue d'amener les deux pièces des moyens de maintien 10 dans une position de maintien appropriée.

Tel que visible figure 7, ces moyens de traction 19 peuvent être constitués par un système vis-écrou associé à ces deux secondes portions 85; 86 et susceptible d'être actionné par un opérateur.

Selon une autre caractéristique, les pièces des moyens de maintien 10 sont, de préférence, disposées de part et d'autre d'un plan P au moins parallèle (voire confondu) au plan médian de l'élément d'échappement 21 à fixer.

Encore une autre caractéristique consiste en ce qu'au moins un des pièces (mais de préférence l'ensemble de ces pièces) des moyens de maintien 10 est constituée par une cale 11; 11' présentant les caractéristiques susmentionnées et associée à la première portion 83; 84 d'un élément 81; 82 des moyens de solidarisation 8.

Cependant et selon un mode de réalisation particulier de l'invention visible figures 7 et 8, au moins un élément 81; 82 des moyens de solidarisation 8 est constitué par une lame rigide ou semi-rigide conformée (plus particulièrement par déformation) en sorte d'adopter, au niveau de sa première portion 83; 84, la forme d'une pièce des moyens de maintien 10, plus particulièrement sous forme d'une telle cale 11; 11'.

On observera que le dispositif 5 peut, encore, comporter, au niveau d'une telle première portion 83; 84, un élément 20 additionnel et rigide permettant de remédier à un éventuel défaut de rigidité des moyens de maintien 10.

Tel que visible sur les figures 7 et 8, les deux éléments 81; 82 des moyens de solidarisation 8 sont agencées en sorte de se croiser au sein du dispositif 5, ceci à l'intérieur de l'espacement 7 et, plus particulièrement, à proximité ou au niveau des moyens de maintien 10. Un tel mode de réalisation permet, avantageusement et en cas de traction sur l'une au moins des secondes portions 85; 86 de ces deux éléments 81; 82, d'assurer un déplacement de l'une au moins des pièces mobiles des moyens de maintien 10 (cales 11; 11') correspondantes en direction de l'autre.

A ce propos, on observera que la première portion 83 d'un élément 81 des moyens de solidarisation 8 peut adopter la forme d'une première languette comportant, à son extrémité distale, une pièce des moyens de maintien 10 tandis que la première portion 84 de l'autre élément 82 des moyens de solidarisation 8 peut adopter la forme d'au moins une autre languette, d'une part, comportant, à son extrémité distale, une autre pièce des moyens de maintien 10 et, d'autre part, venant croiser ladite première languette, notamment en étant positionnée à proximité de celle-ci. Un mode de réalisation particulier représenté figure 8 consiste en ce que la première portion 84 de l'autre élément 82 des moyens de solidarisation 8 comporte deux languettes espacées entre elles de manière à définir une fente pour le passage de ladite première languette.

On observera que les moyens de solidarisation 8 de l'élément d'échappement 21 sont, eux-mêmes, rendus solidaires du support 6 et sont conçus en sorte que, en procédant à la mise en place des moyens de maintien 10 dans l'espacement 7 par traction comme susmentionné, il est procédé, également et de manière simultanée, à la fixation de cet élément d'échappement 21 sur ce support 6.

Selon une autre caractéristique de l'invention et tel que visible sur les figures 2 et 3, les moyens de maintien 10 peuvent être libres en déplacement par rapport au support 6 et/ou par rapport à l'élément d'échappement 21, ceci au moins jusqu'à leur mise en place dans leur position de maintien de cet élément d'échappement 21.

Cependant et selon une caractéristique additionnelle de l'invention, le dispositif de fixation 5, plus particulièrement le support 6, comporte des moyens 13 de montage en déplacement d'une partie au moins des moyens de maintien 10 par rapport à ce support 6 et/ou à l'élément d'échappement 21.

De tels moyens 13 de montage en déplacement sont, de préférence, définis au niveau dudit support 6 ou associés à ce dernier 6 et peuvent, selon un premier mode de réalisation non représenté, être constitués par des moyens de guidage (notamment sous la forme d'un rail, d'une goulotte ou analogue) recevant lesdits moyens de maintien 10.

Selon un autre mode de réalisation illustré figures 4 à 6, de tels moyens 13 de montage en déplacement sont constitués par des moyens de montage en coulissement de ces moyens de maintien 10 par rapport audit support 6.

De tels moyens de montage en coulissement peuvent, alors, être constitués, d'une part et au niveau dudit support 6, par au moins une lumière 14 et, d'autre part et au niveau des moyens de maintien 10, par au moins un organe 15 (sous la forme d'un téton ou analogue) monté en coulissement dans une telle lumière 14.

En fait, un mode de réalisation préféré illustré figures 4 à 6 consiste en ce que les moyens de maintien 10 comportent, de part et d'autre, un tel organe 15 conçu pour coulisser, chacun, dans une lumière 14 définie au niveau d'un montant 16 d'une chape 17 ou analogue associée au support 6, notamment par soudure.

Une telle chape 17 peut être constituée par une pièce en « U » au niveau de laquelle sont définis lesdits montants 16 ou, encore, par deux pièces indépendantes (figure 4), notamment en équerre, au niveau desquelles sont définis les deux montants 16. Une telle pièce est rendue solidaire du support 6, notamment par soudure.

En ce qui concerne les moyens 13 de montage en déplacement associés au mode de réalisation comportant des moyens 18 d'amenée d'une pièce mobile, ceux-ci peuvent, là encore, être constitués par des moyens de montage en coulissement des moyens de maintien (10) par rapport audit support (6).

En particulier et tel que visible figures 7 et 8, de tels moyens 13 de montage peuvent être constitués, d'une part, par une pièce en forme de "T" (plus particulièrement un rivet, une vis ou analogue) rendue solidaire du support 6 et, d'autre part, par une lumière, définie au niveau des moyens de solidarisation 8, recevant le pied de la pièce en forme de "T" par rapport auquel se déplace, par coulissement, ladite lumière.

A ce propos, on observera qu'une telle lumière peut être définie au niveau de l'un au moins des éléments 81; 82 de ces moyens de solidarisation 8, plus particulièrement au niveau d'au moins une languette que comporte un tel élément 81; 82.

Cependant et selon un autre mode de réalisation, de tels moyens 13 de montage en déplacement peuvent se présenter sous la forme d'un cavalier ou analogue disposé par-dessus au moins un élément 81; 82 des moyens de solidarisation 8 (de préférence par-dessus les deux éléments 81; 82) et rendu solidaire du support 6.

En ce qui concerne les moyens de maintien 10 illustrés figures 4 à 6, ceux-ci sont constitués par une cale 11, 11' adoptant la forme d'un bouton ou analogue présentant une forme partiellement arrondie (bombée) orientée en direction dudit élément d'échappement 21.

Une autre caractéristique de l'invention consiste en ce que le dispositif de fixation 5 comporte des moyens d'immobilisation des moyens de maintien 10 dans la position de maintien de l'élément d'échappement 21.

Selon un premier mode de réalisation, ces moyens d'immobilisation sont, en fait, mis en oeuvre après que les moyens de maintien 10 aient été amenés dans la position de maintien dudit élément d'échappement 21.

Tel que visible sur les figures 2 à 6, de tels moyens d'immobilisation sont au moins en partie constitués par les moyens 8 de solidarisation de l'élément d'échappement 21 du support 6, de tels moyens de solidarisation 8 étant, tel qu'évoqué ci-dessus, constitués par une sangle 9 ou analogue qui est, alors, conçue pour prendre appui sur lesdits moyens de maintien 10.

Au travers de cette prise d'appui et par serrage de la sangle 9, les moyens de maintien 10 sont repoussés contre l'élément d'échappement 21 qui lui-même est repoussé (par l'intermédiaire de la sangle 9 desdits moyens d'immobilisation) contre ces moyens de maintien 10 et contre le support 6. Il en résulte une immobilisation des moyens de maintien 10 ainsi que de l'élément d'échappement 21, d'une part, les uns 10 par rapport à l'autre 21 et, d'autre part, par rapport au support 6.

Cependant et selon un second mode de réalisation illustré figures 7 et 8, ces moyens d'immobilisation peuvent être mis en oeuvre au cours de l'opération qui consiste à amener les moyens de maintien 10 dans la position de maintien de l'élément d'échappement 21.

Ainsi, la présente invention permet de remédier aux inconvénients des dispositifs de fixation de l'état de la technique. En particulier, cette invention permet d'assurer une immobilisation d'un élément d'échappement 21 dans une position, d'une part, correspondant à celle du montage sur le moteur de la ligne d'échappement comportant cet élément d'échappement 21 et, d'autre part, dans laquelle cet élément d'échappement 21 n'est soumis à aucune contrainte statique.

En fait, la nature, la forme et/ou la structure des moyens de maintien 10, voire des moyens de montage 13 de ces moyens de maintien 10 sur le support 6, permettent, avantageusement, à ces moyens de maintien 10 de se positionner dans l'espacement 7 de manière approprié et de s'adapter aux caractéristiques de cet espacement 7, ceci pour assurer un maintien de l'élément d'échappement 21 sans soumettre celui-ci à une quelconque contrainte statique. Un tel maintien est, alors, réalisé de manière appropriée quelles que soient la forme, voire les irrégularités, de l'élément d'échappement 21, voire encore le positionnement de cet élément d'échappement 21 suite à son montage sur le moteur 4.

Ainsi, ledit élément d'échappement 21 est maintenu dans la position correspondant à celle de son montage sur le moteur 4 et est immobilisé dans cette position par l'intermédiaire des moyens de solidarisation 8, ceci sans qu'il soit soumis à une quelconque contrainte statique.

## Revendications

1. Dispositif (5) pour la fixation, sur le moteur (4) d'un véhicule automobile, d'un élément d'échappement (2 ; 21) que comporte une ligne d'échappement (1) des gaz issus de la combustion d'un carburant au sein de ce moteur (4), ce dispositif (5) comportant, d'une part, au moins un support (6) destiné à être rendu solidaire dudit moteur (4), d'autre part, des moyens (8) pour rendre cet élément d'échappement (21) solidaire de ce support (6) et, d'autre part encore, des moyens (10), interposés entre le support (6) et l'élément d'échappement (21) à fixer, et conçus pour assurer un maintien de cet élément d'échappement (21) à une distance déterminée dudit support (6) et, par conséquent, du moteur (4), **caractérisé par le fait que** les moyens de maintien (10) sont constitués par au moins une pièce mobile par rapport à l'élément d'échappement (21) et/ou au support (6), ceci en direction et/ou à l'intérieur d'un espacement (7) défini entre cet élément d'échappement (21) et son support (6).

2. Dispositif (5) de fixation selon la revendication 1, **caractérisé par le fait que** les moyens de maintien (10) sont de type ajustable à la distance que sépare cet élément d'échappement (21) et le support (6) après fixation d'une extrémité de la ligne d'échappement (1) sur ce moteur (4).

3. Dispositif (5) de fixation selon l'une quelconque des revendications précédentes, **caractérisé par le fait que** les moyens de maintien (10) sont constitués par au moins une cale (11 ; 11') pouvant adopter, notamment en fonction de la forme de l'élément d'échappement (21), une forme parallélépipédique, au moins partiellement arrondie, en coin, en virgule ou analogue.

4. Dispositif (5) de fixation selon la revendication 3, **caractérisé par le fait que** les moyens de maintien (10) sont constitués par deux cales (11, 11') disposées de part et d'autre d'un plan (P) au moins parallèle au plan médian de l'élément d'échappement (21) à fixer.

5. Dispositif (5) de fixation selon l'une quelconque des revendications 3 ou 4, **caractérisé par le fait qu'**une cale (11 ; 11') adopte la forme d'une virgule et est réalisée à partir d'une lame, notamment de type métallique ou analogue.

6. Dispositif (5) de fixation selon l'une quelconque des revendications 3 ou 4, **caractérisé par le fait qu'**une cale (11 ; 11') adopte la forme d'un bouton ou analogue présentant une forme partiellement arrondie orientée en direction dudit élément d'échappement (21).

7. Dispositif (5) de fixation selon l'une quelconque des revendications précédentes, **caractérisé par le fait qu'**il est conçu en sorte qu'au moins une partie des moyens de maintien (10) sont mobiles en direction de la position de maintien de l'élément d'échappement (21) sous l'effet de la gravité.

8. Dispositif (5) de fixation selon l'une quelconque des revendications précédentes, **caractérisé par le fait qu'**il comporte des moyens de rappel (12) d'au moins une partie des moyens de maintien (10) en direction de la position de maintien de l'élément d'échappement (21).

9. Dispositif (5) de fixation selon les revendications 4 et 8, **caractérisé par le fait qu'**il comporte deux cales (11 ; 11') raccordées entre elles par le biais de moyens de rappel (12) de l'une (11) vers l'autre (11').

10. Dispositif (5) de fixation selon l'une quelconque des revendications précédentes, **caractérisé par le fait qu'**il comporte des moyens (18) conçus pour amener au moins une pièce mobile, que comportent les moyens de maintien (10), dans une position de maintien de l'élément d'échappement (21), ceci sous l'impulsion d'une action exercée par un opérateur.

11. Dispositif (5) de fixation selon la revendication 10, **caractérisé par le fait que** les moyens (18) pour amener une telle pièce mobile en position de maintien sont constitués par une partie au moins des moyens de solidarisation (8) que comporte ledit dispositif de fixation (5), qui est associée à cette pièce mobile et sur laquelle agit l'opérateur.

12. Dispositif (5) de fixation selon la revendication 11, **caractérisé par le fait que** les moyens de solidarisation (8) comportent au moins un élément présentant une première portion associée à une pièce mobile des moyens de maintien (10) ainsi qu'une seconde portion sur laquelle agit l'opérateur en vue d'amener cette pièce mobile dans une position de maintien de l'élément d'échappement (21).

13. Dispositif (5) de fixation selon la revendication 12, **caractérisé par le fait que** les moyens de solidarisation (8) comportent deux éléments (81; 82), agencés en sorte d'entourer l'élément d'échappement (21) à maintenir, et présentant, chacun, d'une part, une première portion (83; 84) associée à une pièce des moyens de maintien (10) et, d'autre part, une deuxième portion (85; 86), notamment de type libre.

14. Dispositif (5) de fixation selon l'une quelconque des revendications 10 à 14, **caractérisé par le fait qu'**il comporte des moyens (19) aptes à exercer une traction sur les moyens (18) pour amener une pièce mobile en position de maintien de l'élément d'échappement (21) à maintenir.

15. Dispositif (5) de fixation selon l'une quelconque des revendications 12 ou 13, **caractérisé par le fait qu'**au moins un élément des moyens de solidarisation (8) est constitué par une lame rigide ou semi-rigide conformée en sorte d'adopter, au niveau de sa première portion, la forme d'une pièce des moyens de maintien (10) .

16. Dispositif (5) de fixation selon l'une quelconque des revendications précédentes, **caractérisé par le fait que** ce dispositif (5), plus particulièrement son support (6), comporte des moyens (13) de montage en déplacement d'une partie au moins des moyens de maintien (10) par rapport à l'élément d'échappement (21) et/ou au support (6).

17. Dispositif (5) de fixation selon la revendication 16, **caractérisé par le fait que** les moyens (13) de montage en déplacement sont constitués, au niveau dudit support (6), par des moyens de montage en coulissement des moyens de maintien (10) par rapport audit support (6).

18. Dispositif (5) de fixation selon la revendication 17, **caractérisé par le fait que** les moyens de montage en coulissement sont constitués, d'une part et au niveau du support (6), par au moins une lumière (14) et, d'autre part et au niveau des moyens de maintien (10), par au moins un organe (15) monté en coulissement dans une telle lumière (14).

19. Dispositif (5) de fixation selon la revendication 18, **caractérisé par le fait que** la lumière (14) est définie au niveau d'un montant (16) d'une chape (17) ou analogue associée au support (6), notamment par soudure.

20. Dispositif (5) de fixation selon la revendication 19, **caractérisé par le fait que** la chape (17) est constituée par une pièce en « U » au niveau de laquelle sont définis lesdits montants (16) ou par deux pièces indépendantes, notamment en équerre, au niveau desquelles sont définis les deux montants (16), une telle pièce étant rendue solidaire du support (6), notamment par soudure.

21. Dispositif (5) de fixation selon l'une quelconque des revendications précédentes, **caractérisé par le fait qu'**il comporte des moyens d'immobilisation des moyens de maintien (10) dans la position de maintien de l'élément d'échappement (21).

22. Dispositif (5) de fixation, **caractérisé par le fait qu'**il comporte une sangle (9) constituant, selon le cas, les moyens de solidarisation (8) selon l'une quelconque des revendications précédentes et/ou les moyens d'immobilisation selon la revendication 21.

## Claims

1. Device (5) for the attachment to the engine (4) of an automobile vehicle of an exhaust element (2 ; 21) comprised by an exhaust line (1) of gases that result from the combustion of petrol within this engine (4), on the one hand, this device (5) comprises at least one support (6), designed to be interdependent with the aforementioned engine (4), on the other hand, it comprises means (8) to ensure the exhaust element (21) is interdependent with this support (6) and, moreover, it comprises means (10) interposed between the support (6) and the exhaust element (21) to be attached, and that are designed to make sure the exhaust element (21) is held at a specified distance from the aforementioned support (6) and therefore from the engine (4), **characterized in that** the holding means (10) are composed of at least one mobile part in relation to the exhaust element (21) and/or to the support (6), mobile in the direction and/or inside of a defined space (7) between the exhaust element (21) and its support (6).

2. Attachment device (5) according to claim 1, **characterized in that** the holding means (10) are adjustable to the distance that separates the exhaust element (21) and the support (6) after the attachment of one end of the exhaust line (1) to the engine (4).

3. Attachment device (5) according to any of the aforementioned claims, **characterized in that** the holding means (10) are composed of at least one wedge (11 ; 11'), which, notably in accordance with the shape of the exhaust element (21), can take a parallelepipedic shape, at least partially rounded, a corner shape, a comma shape or something similar.

4. Attachment device (5) according to claim 3, **characterized in that** the holding means (10) are constituted by two wedges (11, 11'), set at both sides of a plan (P), at least parallel to the mid-plane of the exhaust element (21) to be attached.

5. Attachment device (5) according to any of claims 3 or 4, **characterized in that** a wedge (11 ; 11') is comma-shaped and is made from a blade, notably of metallic type, or something similar.

6. Attachment device (5) according to any of claims 3 or 4, **characterized in that** a wedge (11 ; 11') takes the shape of a button or something similar, showing a partially rounded shape orientated in the direction of the exhaust element (21).

7. Attachment device (5) according to any of the aforementioned claims, **characterized in that** it is designed to ensure that at least some of the holding means (10) are mobile, in the direction of the holding position of the exhaust element (21), under the effect of gravity.

8. Attachment device (5) according to any of the aforementioned claims, **characterized in that** it comprises means of return (12) of at least a part of the holding means (10), in the direction of the holding position of the exhaust element (21).

9. Attachment device (5) according to claims 4 and 8 **characterized in that** it comprises two wedges (11 ; 11'), which are joined together through means of return (12) from one (11) to the other (11').

10. Attachment device (5) according to any of the aforementioned claims, **characterized in that** it comprises means (18), designed to bring at least one mobile part belonging to the holding means (10) into a holding position of the exhaust element (21), under the impulse of the action exerted by the operator.

11. Attachment device (5) according to claim 10, **characterized in that** the means (18) to bring such a mobile part into a holding position, are at least partly constituted of means of interconnection (8), which are part of the attachment device (5), which is associated with this mobile part and that is activated by the operator.

12. Attachment device (5) according to claim 11, **characterized in that** the means of interconnection (8) comprise at least one element, presenting a first portion associated with a mobile part of the holding means (10) as well as a second portion, which is activated by the operator in order to bring the mobile part into a holding position of the exhaust element (21).

13. Attachment device (5) according to claim 12, **characterized in that** the means of interconnection (8) comprise two elements (81 ; 82), designed in order to surround the exhaust element (21) to be held, and on the one hand, they both present a first portion (83 ; 84) associated with one part of the holding means (10), on the other hand, they present a second portion (85; 86), which is notably a free type.

14. Attachment device (5) according to any of claims 10 to 13, **characterized in that** it comprises means (19) capable of exerting traction on the means of interconnection (18) to bring a mobile part into a holding position of the exhaust element to be held.

15. Attachment device (5) according to any of claims 12 or 13, **characterized in that** at least one element of the means of interconnection (8) is composed of a rigid or semi-rigid blade, designed to be shaped like one of the parts of the holding means (10), at the level of its first portion.

16. Attachment device (5) according to any of the aforementioned claims, **characterized in that** this device (5), and more precisely its support (6), comprises means of assembly (13) moving from at least one of the parts of the holding means (10) in relation to the exhaust element (21) and/or support (6).

17. Attachment device (5) according to claim 16, **characterized in that** the moving means of assembly (13), at the level of the aforementioned support (6), are composed of sliding means of assembly of the holding means (10) in relation to the support (6).

18. Attachment device (5) according to claim 17, **characterized in that** the sliding means of assembly are composed, on the one hand and at the level of the support (6), of at least one aperture (14), and, on the other hand and at the level of the holding means (10), of at least one unit (15), which is sliding mounted in such an aperture (14).

19. Attachment device (5) according to claim 18, **characterized in that** the aperture (14) is defined at the level of an stile (16) of an eye joint link (17) or something similar, associated to the support (6), notably by welding.

20. Attachment device (5) according to claim 19, **characterized in that** the eye joint link (17) is composed either of a "U" part at the level of which the aforementioned stiles (16) are defined or of two independent parts, notably at right angles, at the level of which the two stiles (16) are defined, such a part is interconnected to the support (6), notably via welding.

21. Attachment device (5) according to any of the aforementioned claims, **characterized in that** it comprises means of immobilization of the holding means (10) in the holding position of the exhaust element (21).

22. Attachment device (5) **characterized in that** it comprises a strap (9), which, constitutes, as the case may be, the means of interconnection (8) according to any of the aforementioned claims and/or the means of immobilization according to claim (21).

## Patentansprüche

1. Vorrichtung (5) für die Befestigung am Motor (4) eines Kraftfahrzeugs von einem Auspuffbauteil (2; 21), welches eine Anlage zur Ableitung (1) der bei der Verbrennung eines Treibstoffs innerhalb dieses Motors (4) entstandenen Abgase umfasst, wobei diese Vorrichtung (5), einerseits, zumindest einen Träger (6) umfasst, der vorgesehen ist, um mit dem besagten Motor (4) fest verbunden zu werden, andererseits, Mittel (8), um dieses Auspuffbauteil (21) mit diesem Träger (6) fest zu verbinden, und, andererseits noch, Mittel (10) umfasst, die zwischen dem Träger (6) und dem zu befestigenden Auspuffbauteil (21) eingefügt sind, und die vorgesehen sind, um das Halten dieses Auspuffselements (21) in einer bestimmten Entfernung von dem besagten Träger (6), und folglich von dem Motor (4), zu sichern, **dadurch gekennzeichnet, dass** die Haltemittel (10) durch wenigstens ein Bauteil gebildet sind, das hinsichtlich des Auspuffbauteils (21) und/oder des Trägers (6), und zwar in Richtung zum und/oder im Inneren eines zwischen diesem Auspuffbauteil (21) und seinem Träger (6) gebildeten Zwischenraums (7) beweglich ist.

2. Befestigungsvorrichtung (5) nach Anspruch 1, **dadurch gekennzeichnet, dass** die Haltemittel (10) dem Abstand, der dieses Auspuffbauteil (21) und den Träger (6) nach der Befestigung des einen Endes der Auspuffanlage (1) am Motor (4) trennt, anpassbar sind.

3. Befestigungsvorrichtung (5) nach irgendeinem der vorgehenden Ansprüche, **dadurch gekennzeichnet, dass** die Haltemittel (10) durch wenigstens ein Spant (11; 11') gebildet sind, das insbesondere in Abhängigkeit von der Form des Auspuffbauteils (21) eine zumindest teilweise abgerundete, quaderförmige Keil-, Kommaspanform oder dergleichen annehmen kann.

4. Befestigungsvorrichtung (5) nach Anspruch 3, **dadurch gekennzeichnet, dass** die Haltemittel (10) durch zwei Spanten (11, 11') gebildet sind, die beiderseits von einer Ebene (P) angeordnet sind, die zu der Mittelebene des zu befestigenden Auspuffbauteils (21) zumindest parallel ist.

5. Befestigungsvorrichtung (5) nach irgendeinem der Ansprüche 3 oder 4, **dadurch gekennzeichnet, dass** ein Spant (11; 11') die Form von einem Kommaspan annimmt und aus einem insbesondere metallischen Plättchen oder dergleichen hergestellt ist.

6. Befestigungsvorrichtung (5) nach irgendeinem der Ansprüche 3 oder 4, **dadurch gekennzeichnet, dass** ein Spant (11; 11') die Form von einem Knopf oder dergleichen annimmt, der eine teilweise abgerundete Form aufweist, die in Richtung zu dem besagten Auspuffbauteil (21) gerichtet ist.

7. Befestigungsvorrichtung (5) nach irgendeinem der vorgehenden Anspruche, **dadurch gekennzeichnet, dass** sie derart vorgesehen ist, dass wenigstens ein Teil von den Haltemitteln (10) unter der Wirkung des Selbstgewichts in Richtung zu der Position zum Halten des Auspuffbauteils (21) hin beweglich sind.

8. Befestigungsvorrichtung (5) nach irgendeinem der vorgehenden Ansprüche, **dadurch gekennzeichnet, dass** sie Mittel für die Rückstellung (12) von wenigstens einem Teil der Haltemittel (10) in Richtung zu der Position zum Halten des Auspuffbauteils (21) umfasst.

9. Befestigungsvorrichtung (5) nach den Ansprüchen 4 und 8, **dadurch gekennzeichnet, dass** sie zwei Spanten (11; 11') umfasst, die mit Hilfe von Mitteln zur Rückstellung (12) des einen (11) in Richtung zu dem anderen (11') miteinander verbunden sind.

10. Befestigungsvorrichtung (5) nach irgendeinem der vorgehenden Ansprüche, **dadurch gekennzeichnet, dass** sie Mittel (18) umfasst, die vorgesehen sind, um wenigstens ein bewegliches Stück, welches die Haltemittel (10) umfassen, in eine Position zum Halten des Auspuffbauteils (21), und zwar unter der Wirkung eines von einem Bediener ausgeübten Stoßes, zu bringen.

11. Befestigungsvorrichtung (5) nach Anspruch 10, **dadurch gekennzeichnet, dass** die Mittel (18), um ein solches bewegliches Stück in Position zum Halten zu bringen, durch wenigstens einen Teil von den Mitteln zur festen Verbindung (8) gebildet sind, die die besagte Befestigungsvorrichtung (5) umfasst, welcher mit diesem beweglichen Stück verbunden ist, und auf welchen der Bediener wirkt.

12. Befestigungsvorrichtung (5) nach Anspruch 11, **dadurch gekennzeichnet, dass** die Mittel zur festen Verbindung (8) wenigstens ein Element umfassen, das einen ersten Teil aufweist, welcher mit einem beweglichen Stück der Haltemittel (10) verbunden ist, sowie einen zweiten Teil, auf welchen der Bediener wirkt, um dieses bewegliche Stück in eine Position zum Halten des Auspuffbauteils (21) zu bringen.

13. Befestigungsvorrichtung (5) nach Anspruch 12, **dadurch gekennzeichnet, dass** die Mittel zur festen Verbindung (8) zwei Einzelteile (81; 82) umfassen, die derart angeordnet sind, um das zu haltende Auspuffbauteil (21) zu umschließen, und jeweils, einerseits, einen ersten Teil (83; 84), der mit einem Stück der Haltemittel (10) verbunden ist, und, andererseits, einen zweiten, insbesondere freien Teil (85; 86) aufweisen.

14. Befestigungsvorrichtung (5) nach irgendeinem der Ansprüche 10 bis 14, **dadurch gekennzeichnet, dass** sie Mittel (19) umfasst, die geeignet sind, um eine Antriebskraft auf die Mittel (18) auszuüben, um ein bewegliches Stück in Position zum Halten des zu haltenden Auspuffbauteils (21) zu bringen.

15. Befestigungsvorrichtung (5) nach irgendeinem der Ansprüche 12 oder 13, **dadurch gekennzeichnet, dass** wenigstens ein Bauteil der Mittel zur festen Verbindung (8) durch ein starres oder halbstarres Plättchen gebildet ist, das derart angepasst ist, um im Bereich seines ersten Teils die Form von einem Stück der Haltemittel (10) anzunehmen.

16. Befestigungsvorrichtung (5) nach irgendeinem der vorgehenden Ansprüche, **dadurch gekennzeichnet, dass** diese Vorrichtung (5), insbesondere ihr Träger (6), Mittel (13) zur verschiebbaren Lagerung von einem Teil zumindest der Haltemittel (10) hinsichtlich des Auspuffbauteils (21) und/oder des Trägers (6) umfasst.

17. Befestigungsvorrichtung (5) nach Anspruch 16, **dadurch gekennzeichnet, dass** die Mittel (13) zur verschiebbaren Lagerung im Bereich des besagten Trägers (6) durch die Mittel zur verschiebebeweglichen Lagerung der Haltemittel (10) hinsichtlich des besagten Trägers (6) gebildet sind.

18. Befestigungsvorrichtung (5) nach Anspruch 17, **dadurch gekennzeichnet, dass** die Mittel zur verschiebebeweglichen Lagerung, einerseits und im Bereich des Trägers (6), durch wenigstens eine Öffnung (14), und, andererseits und im Bereich der Haltemittel (10), durch wenigstens ein Organ (15) gebildet sind, das in einer solchen Öffnung (14) verschiebebeweglich gelagert ist.

19. Befestigungsvorrichtung (5) nach Anspruch 18, **dadurch gekennzeichnet, dass** die Öffnung (14) im Bereich eines Ständers (16) von einem Bügel (17) oder dergleichen gebildet ist, der mit dem Träger (6) insbesondere durch Schweißen verbunden ist.

20. Befestigungsvorrichtung (5) nach Anspruch 19, **dadurch gekennzeichnet, dass** der Bügel (17) durch ein "U"-förmiges Stück gebildet ist, im dessen Bereich die besagten Ständer (16) gebildet sind, oder durch zwei unabhängige, insbesondere rechtwinklige Stücke gebildet ist, im deren Bereich die beiden Ständer (16) gebildet sind, wobei ein solches Stück insbesondere durch Schweißen mit dem Träger (6) verbunden sei.

21. Befestigungsvorrichtung (5) nach irgendeinem der vorgehenden Ansprüche, **dadurch gekennzeichnet, dass** sie Mittel zur Unbeweglichmachung der Haltemittel (10) in der Position zum Halten des Auspuffbauteils (21) umfasst.

22. Befestigungsvorrichtung (5), **dadurch gekennzeichnet, dass** sie einen Gurt (9) umfasst, der, je nach dem Fall, die Mittel zur festen Verbindung (8) nach irgendeinem der vorgehenden Ansprüche und/oder die Mittel zur Unbeweglichmachung nach Anspruch 21 bildet.
